# EUROPÄISCHE PATENTSCHRIFT

(11) **EP 3 696 490 B1**
(45) Veröffentlichungstag und Bekanntmachung des Hinweises auf die Patenterteilung: **06.07.2022**
(21) Anmeldenummer: 19156972.2
(22) Anmeldetag: 13.02.2019
(51) Int. Cl.: F41H 5/04, B33Y 80/00

(54) **VERFAHREN ZUM HERSTELLEN EINER PANZERPLATTE UND PANZERPLATTE**
ARMOUR PANEL AND METHOD FOR PRODUCING AN ARMOUR PANEL
PROCÉDÉ DE FABRICATION D'UNE PLAQUE DE BLINDAGE ET PLAQUE DE BLINDAGE

(43) Veröffentlichungstag der Anmeldung: 19.08.2020
(73) Patentinhaber: Mehler Engineered Defence GmbH, 38154 Königslutter (DE)
(72) Erfinder: Vahldiek, Christian, 38364 Schöningen (DE)
(74) Vertreter: Gramm, Lins & Partner Patent- und Rechtsanwälte PartGmbB

(56) Entgegenhaltungen:
- DE-A1-102015 222 184
- US-A1- 2015 345 913
- US-A1- 2017 113 253
- US-A1- 2017 226 891

## Beschreibung

Die Erfindung betrifft ein Verfahren zum Herstellen einer Panzerplatte für eine Plattenpanzerung, wobei die Panzerplatte einen Körper aus einer Metalllegierung aufweist. Die Erfindung betrifft zudem eine nach diesem Verfahren hergestellte Panzerplatte.

Ein derartiges Verfahren ist beispielsweise aus der US 2015/0345913 A1 bekannt. In ihr ist ein Verfahren beschrieben, bei dem ein Panzerelement zum Schutz vor ballistischen Projektilen hergestellt wird, das in der dem Beschuss ausgesetzten Fläche mehrere Löcher aufweist.

Panzerplatten aus Metalllegierungen werden seit langer Zeit für Plattenpanzerungen verwendet. Sie werden beispielsweise in Fahrzeuge, insbesondere Kraftfahrzeuge, Schienenfahrzeuge, Helikopter oder Boote eingebaut, um die Insassen vor Angriffen beispielsweise durch Schusswaffen, Feuer oder Explosionen zu schützen. Plattenpanzerungen können aber auch beispielsweise in Form von schusssicherer Kleidung direkt am Körper getragen werden, um eine Person außerhalb eines Fahrzeugs zu schützen.

Die Gefahren, vor denen eine solche Plattenpanzerung schützen soll, sind vielfältig. So soll die Plattenpanzerung beispielsweise die Insassen eines Kraftfahrzeuges vor dem direkten Beschuss mit Schusswaffen, bevorzugt auch von großkalibrigen Schusswaffen ebenso schützen wie beispielsweise vor den Splittern eines Sprengsatzes. Zudem sollen auch Explosionen nahe oder unter dem Fahrzeug, wie sie beispielsweise hervorgerufen werden, wenn ein Kraftfahrzeug über eine Landmine fährt, von der Plattenpanzerung für die Insassen unschädlich gemacht werden.

Herkömmlicherweise werden derartige Panzerplatten aus Panzerstählen hergestellt, indem beispielsweise Panzerbleche in einer Pressform oder einem Gesenk durch Warmumformung in die gewünschte Form gebracht werden. Dazu müssen bauteilspezifische Formen vor der Fertigung der eigentlichen Panzerplatten hergestellt werden. Soll beispielsweise der Innenraum eines Kraftfahrzeuges vollständig geschützt werden, müssen eine Reihe unterschiedlich geformter Panzerplatten hergestellt werden, für die jeweils unterschiedliche Formen hergestellt werden müssen.

Bei der Herstellung der Panzerplatten werden die auf die Umformtemperatur gebrachten Panzerstahlbleche, aus denen die Panzerplatten hergestellt werden sollen, in die jeweilige Form eingesetzt und dann mittels einer Presse in die gewünschte Form gepresst. Oftmals erhalten die Formen eine integrierte Kühlung, um die zur Härtung erforderliche Abkühlgeschwindigkeit zu erreichen. Die so hergestellten Pressrohlinge werden oftmals mittels geeigneter Verfahren besäumt um den außengeometrischen Anforderungen zu entsprechen. Nachteilig ist, dass die Herstellung derartiger Panzerplatten sehr kostenaufwendig und wenig flexibel ist. Ändert sich beispielsweise bei der Entwicklung eines neuen Kraftfahrzeuges die Geometrie der benötigten Panzerplatten, müssen neue Formen kostenaufwendig hergestellt werden. Zudem müssen die hergestellten Panzerplatten zunächst auf ihre Zuverlässigkeit und insbesondere Schusssicherheit getestet werden. Ändert sich beim Entwicklungsprozess die benötigte Form der Panzerplatten, müssen diese neu geformten Panzerplatten erneut alle Tests durchlaufen.

Durch die aus dem Stand der Technik bekannten Herstellverfahren für entsprechende Panzerplatten sind die herzustellenden Geometrien zudem stark eingeschränkt. Daher ist es aus der DE 10 2012 017 135 A1 und der DE 10 2015 222 184 A1 bekannt, additive Fertigungsverfahren zu benutzen oder die jeweilige Panzerplatte durch ein Gussverfahren herzustellen. Damit sind Platten herstellbar, die an die jeweilige Geometrie des Fahrzeugs angepasst werden können und so beispielsweise großfläche Aussparungen aufweist, durch die etwa ein Fahrzeugtunnel in der Mitte des Fahrzeugs geführt werden kann. Es ist auch bekannt, die Platten als tragende Elemente des Fahrzeugs zu verwenden.

Oftmals ist es jedoch gewünscht, beispielsweise einen Kanal beispielsweise für ein Löschmittel, durch die Panzerplatte hindurch zu führen. Dieser muss zunächst in einem zeit- und kostenintensiven Verfahren in die Panzerplatte eingebracht werden und bedeutet natürlich eine Schwächung der Schutzwirkung. Folglich wird an derartigen Stellen die Panzerplatte oftmals durch ein weiteres aus Panzerstahl hergestelltes Bauteil verstärkt, das in einem weiteren Verfahrensschritt an die Panzerplatte angeschweißt wird. Dadurch kommt es jedoch im Bereich der Schweißnaht zu einer temporären Erwärmung der Panzerplatte, wodurch ebenfalls die Schutzwirkung herabgesetzt werden kann. Gleiches gilt für Anschlusselemente, durch die die Panzerplatte an anderen Bauteilen oder andere Bauteile an der Panzerplatte befestigbar sind.

Der Erfindung liegt daher die Aufgabe zugrunde, ein Verfahren zum Herstellen von Panzerplatten bereitzustellen, mit dem Panzerplatte in der gewünschten Form kostengünstig und schnell hergestellt werden können.

Die Erfindung löst die gestellte Aufgabe durch ein Verfahren zum Herstellen einer Panzerplatte für eine Plattenpanzerung, wobei die Panzerplatte einen Körper aus einer Metalllegierung aufweist, wobei der Körper durch wenigstens einen additiven Fertigungsschritt hergestellt wird, wobei der Körper wenigstens einen durchgängigen Kanal aufweist, der wenigstens einmal seine Richtung ändert, wobei der wenigstens eine Kanal in dem wenigstens einen additiven Fertigungsschritt hergestellt werden.

Vorzugsweise weist der Körper wenigstens ein Anschlusselement, an dem ein Bauteil befestigbar ist, auf, das in dem wenigstens einen additiven Fertigungsschritt hergestellt wird.

Unter einer additiven Fertigung werden 3D-Druckverfahren verstanden. Besonders bevorzugt werden das selektive Lasersintern oder das selektive Laserschmelzen verwendet, bei denen durch einen Laser die Metalllegierung in Pulverform schichtweise vorzugsweise vollständig und ohne Verwendung von Bindern aufgeschmolzen wird und nach der Erstarrung der Schmelze und der auf diese Weise erfolgten Bearbeitung aller Schichten ein homogener Werkstoff hoher Dichte entsteht. Insbesondere für Metallprozesse hat sich auch der Begriff "direktes Metalllasersintern" (DMLS "Direct Metal Laser Sintering") eingebürgert. Vorzugsweise werden CW-Laser verwendet.

Zunächst wird folglich die Metalllegierung, aus der der Körper der Panzerplatte hergestellt werden soll, gemischt und in Pulverform bereitgestellt. Unter einer Metalllegierung werden vorzugsweise Legierungen verstanden, die mindestens 50%, bevorzugt mindestens 75%, besonders bevorzugt 90% Metalle enthalten. Es ist nicht notwendig und gegebenenfalls auch nicht vorteilhaft, wenn ausschließlich Metalle enthalten sind.

Aus dem Pulver der Metalllegierung wird dann in dem wenigstens einen additiven Fertigungsschritt der Körper der Panzerplatte hergestellt. Da es sich dabei nicht um ein Umformverfahren handelt und keine bauteilspezifischen Formen hergestellt und verwendet werden müssen, können Änderungen in der benötigten Form der Panzerplatte leicht umgesetzt werden. Zudem entfällt die Konstruktion und die Herstellung der kostenintensiven Formen.

Nachdem der Körper der Panzerplatte auf diese Weise hergestellt wurde, kann es von Vorteil sein, in einem weiteren Verfahrensschritt den Körper der Panzerplatte auszulagern, also über eine längere Zeit einer hohen Temperatur auszusetzen, um die Härte des so erzeugten Metalls, insbesondere Panzerstahls, zu erhöhen. Das Auslagern kann beispielsweise bei Temperaturen zwischen 450°C und 500°C, vorzugsweise bei 480°C geschehen.

Die Metalllegierung ist vorteilhafterweise eine Stahllegierung, eine Aluminiumlegierung und/oder eine Titanlegierung. Besonders bevorzugt handelt es sich bei der Metalllegierung um eine Edelstahllegierung. Insbesondere bei Stahllegierungen und Edelstahllegierungen verfügen diese über eine Härte von wenigstens 32 HRC und eine Zugfestigkeit von wenigstens 1000N/mm², wobei die Härte durch Messung gemäß DIN EN 6508-1 wie sie am Anmeldetag gültig ist bestimmt wird.

Das Auslagern des Körpers bei der erhöhten Temperatur kann auch bereits während des wenigstens einen additiven Fertigungsschrittes erfolgen.

Vorzugsweise verfügt der Körper über eine variierende Dicke, die in dem wenigstens einen additiven Fertigungsschritt hergestellt wird. Der Körper der Panzerplatte verfügt in zwei aufeinander senkrecht stehenden Richtungen über eine deutlich größere Ausdehnung als in der dritten Richtung. Diese dritte Richtung ist die Dicke der Platte. Bei Warmumformverfahren mit Pressform oder Gesenk, wie aus dem Stand der Technik zur Herstellung des Körpers einer Panzerplatte verwendet werden, ist diese Dicke über den gesamten Bauteilquerschnitt konstant. Wird an einer Stelle eine geringere Dicke gewünscht, muss der Körper nach dem Warmumformen an diesen gewünschten Stellen beispielsweise durch spanendes Abheben in seiner Dicke reduziert werden. Dies ist zeit- und kostenintensiv. Mit dem Verfahren gemäß diesem Ausführungsbeispiel der vorliegenden Erfindung ist es möglich, bereits im additiven Fertigungsschritt die gewünschte Dicke des Körpers der Panzerplatte herzustellen. Dadurch wird Fertigungszeit eingespart und somit auch die Fertigungskosten und die Menge des eingesetzten Materials reduziert. Auf diese Weise ist es möglich, die Stellen der Panzerplatte, die voraussichtlich einer erhöhten Belastung stand halten müssen oder größeren Schutz bieten sollen, mit einer größeren Dicke auszugestalten, als dies bei den anderen Stellen der Panzerplatte und des Körpers der Panzerplatte der Fall ist.

In einer Ausgestaltung der Erfindung verfügt der Körper über wenigstens ein Anschlusselement, das in dem wenigstens einen additiven Fertigungsschritt hergestellt wird und an dem ein Bauteil befestigbar ist. Das Anschlusselement verfügt vorzugsweise über wenigstens einen Vorsprung und/oder wenigstens eine Vertiefung, insbesondere wenigstens eine Bohrung, wenigstens ein Hinterschnittelement, wenigstens eine Gewindebohrung und/oder wenigstens eine Nut.

Unter einer Bohrung wird vorliegend insbesondere eine Sackbohrung, also eine Vertiefung verstanden, die nicht vollständig durch den Körper der Panzerplatte hindurchführt, sondern einen Boden aufweist. Eine Gewindebohrung ist eine entsprechende Vertiefung, an deren Innenwand sich ein Gewinde befindet. Unter einem Hinterschnittelement wird vorliegend eine Vertiefung verstanden, deren Querschnitt variiert und an wenigstens einer Stelle größer ist als der Querschnitt der Öffnung des Hinterschnittelementes. Es entsteht ein Hinterschnitt, hinter den beispielsweise ein Schnapp- oder Clipselement rasten kann. Ein Vorsprung kann beispielsweise in Form wenigstens einer Rippe vorhanden sein, die bevorzugt in T-, H- oder S-Form ausgeführt ist. Auf diese Weise können beispielsweise unterschiedliche Panzerplatten leicht miteinander in Kontakt gebracht werden, ohne dass die Schutzfunktion beispielsweise gegen einen Beschuss unter einem flachen Einfallswinkel oder den Beschluss durch Splitter, zu reduzieren.

Sollen beispielsweise zwei Panzerplatten für die Plattenpanzerung miteinander verbunden werden und so nebeneinander angeordnet werden, dass auch an der Verbindungsstelle eine ausreichende Schutzwirkung erreicht wird, verfügt vorteilhafterweise der Körper der einen Panzerplatte an seiner Seitenfläche über eine Nut, die besonders bevorzugt in dem wenigstens einen additiven Fertigungsschritt hergestellt wird. In diese Nut kann der Körper der anderen Panzerplatte eingeschoben werden, wie dies von anderen Bauteilen bekannt ist. Der besondere Vorteil des Verfahrens in dieser Ausführungsform liegt darin, dass kein zusätzlicher Verfahrensschritt nötig ist, um eine solche Nut beispielsweise aus zwei Platten herzustellen, die dann aufwendig beispielsweise durch ein Schweißverfahren aneinander befestigt werden müssen, wobei es zu Schwächungen der beiden Platten im Bereich der Schweißnaht kommen kann. Zudem können die Nuten jede gewünschte Form und jeden gewünschten Verlauf aufweisen, da entsprechende Geometrien durch additive Fertigungsschritte leicht hergestellt werden können.

So können beispielsweise auch Übergänge zwischen unterschiedlichen Panzerungselementen der Plattenpanzerung erreicht werden. Soll beispielsweise ein Kraftfahrzeug, ein Helikopter oder ein anderes Fahrzeug geschützt werden, ist es oftmals nicht ausreichend, Panzerplatten mit einem Körper aus der Metalllegierung zu verwenden, da diese intransparent sind. Auch die Scheiben und Fenster eines solchen Fahrzeuges müssen gegen Beschuss und Splitter sowie die Explosionswirkung geschützt werden, wofür Panzergläser verwendet werden. Verfügt der Körper der Panzerplatte über einen entsprechenden Vorsprung, kann auf diesem beispielsweise das Panzerglas eines Fensters oder einer Scheibe angeordnet und auf diese Weise befestigt werden.

Verfügt der Körper der Panzerplatte über wenigstens eine Bohrung und/oder über wenigstens eine Gewindebohrung, können andere Bauteile leicht an diesem Körper montiert werden. Auch zur Montage der Panzerplatte selbst beispielsweise am Chassis oder einem anderen Bauteil eines Fahrzeuges können derartige Gewindebohrungen besonders einfach und vorteilhaft verwendet werden. Auch hier ist es anders als im Stand der Technik nicht nötig, entsprechende Bauteile nach der eigentlichen Herstellung des Körpers in den Körper einzubringen, sondern sie werden bauteilintegriert und damit einstückig in den Körper der Panzerplatte integriert. Dadurch wird die Festigkeit und damit die Schutzwirkung der Panzerplatte an dieser Stelle nicht stärker beeinträchtigt als dies unbedingt nötig ist.

Gleiches gilt für die Verwendung von Hinterschnittelementen, an denen beispielsweise Schnapp-Elemente, Clips-Elemente und/oder Rast-Elemente angeordnet werden können. Insbesondere bei der Verwendung als Panzerplatte für den Schutz eines Fahrzeuges können auf diese Weise Panzerplatte und deren Körper in die Konstruktion des Fahrzeuges integriert werden und beispielsweise auch tragende Eigenschaften, die ansonsten anderen Bauteilen vorbehalten sind, übernehmen. Dadurch kann die Anzahl der benötigten Bauteile, der benötigte Bauraum sowie die dadurch hervorgerufenen Entwicklungs- und Herstellungskosten reduziert werden.

Erfindungsgemäß verfügt der Körper über wenigstens einen durchgängigen Kanal, der in dem wenigstens einen additiven Fertigungsschritt hergestellt wird. Im Gegensatz zu einer Bohrung ist ein Kanal eine durch den Körper der Panzerplatte hindurch gehende Bohrung, die folglich zwei Öffnungen aufweist, die an gegenüberliegenden Seiten des Körpers angeordnet sind. Ein solcher Kanal ist beispielsweise als Kabelführung oder als Leitung für ein Medium, beispielsweise ein Löschmedium, ein Kühlmittel oder ein Funktionsmittel wie beispielsweise eine Bremsflüssigkeit, verwendet werden. Auch dieser Kanal wird erfindungsgemäß bereits während des additiven Fertigungsschrittes hergestellt, so dass keine weiteren Verfahrensschritte notwendig sind.

Erfindungsgemäß ändert der wenigstens eine Kanal wenigstens einmal seine Richtung. Dies bedeutet, dass der Kanal nicht entlang einer geraden Linie von einer Seite des Körpers zur anderen Seite des Körpers der Panzerplatte führt, sondern wenigstens eine Kurve oder einen Knick macht. Auf diese Weise wird einerseits die strukturelle Stabilität der Panzerplatte weniger in Mitleidenschaft gezogen, und andererseits die Schutzwirkung erhöht.

Bevorzugt befindet sich in einer Öffnung des Kanales beispielsweise eine Düse, insbesondere eine Löschdüse, wobei durch den Kanal das Löschmedium zu dieser Löschdüse geleitet werden kann.

In einer bevorzugten Ausgestaltung ist die Dicke des Körpers bei dem wenigstens einen Anschlusselement und/oder der wenigstens einen Öffnung des wenigstens einen Kanals größer als an übrigen Stellen. Trotz der Herstellung in gegebenenfalls nur einem einzigen additiven Herstellungsschritt stellt eine Materialschwächung wie beispielsweise ein Kanal oder eine Vertiefung selbstverständlich eine Schwächung der Schutzwirkung dar. Um dies auszugleichen, werden derartige Anschlusselemente oder Kanalöffnungen in Bereichen angeordnet, die über eine größere Dicke verfügen. Auch dies wird vorzugsweise in dem wenigstens einen additiven Fertigungsschritt berücksichtigt und hergestellt. Der Körper mit all seinen hier beschriebenen Ausführungsformen ist dabei bevorzugt einstückig ausgebildet, so dass insbesondere keine stoffschlüssigen Verbindungen nötig sind, durch die die Struktur und Härte der Metalllegierung beeinträchtigt werden könnte.

Vorzugsweise verfügt der Körper über wenigstens einen geschlossenen Hohlraum, der in dem wenigstens einen additiven Fertigungsschritt hergestellt wird. Auf diese Weise lassen sich die Menge des verwendeten Materials und das Gewicht des Körpers reduzieren, ohne dass dabei die Stabilität und Sicherheit leidet.

Vorzugsweise verfügt der Körper an wenigstens einer Oberseite über wenigstens einen Vorsprung, bevorzugt eine Mehrzahl von Vorsprüngen. Diese können beispielsweise in Form von Pyramiden oder Kegeln, Kugelbestandteilen oder Rippen ausgebildet sein. Derartige an der Oberfläche einer Panzerplatte angeordneten Geometrieelement können Geschosse oder Splitter in ihrer Flugbahn stören und auf diese Weise die Sicherheit beispielsweise in einem Kraftfahrzeug erhöhen.

Die Erfindung löst die gestellte Aufgabe zudem durch eine Panzerplatte, die nach einem der vorstehenden Verfahren hergestellt ist Mit Hilfe der beiliegenden Figuren werden nachfolgend einige Ausführungsbeispiele der vorliegenden Erfindung näher erläutert. Es zeigen:
- Figuren 1 bis 14, 17 und 18: - schematische Schnittdarstellungen durch Ausschnitte aus Panzerplatten und
- Figuren 15 und 16: - verschiedene Strukturelemente.

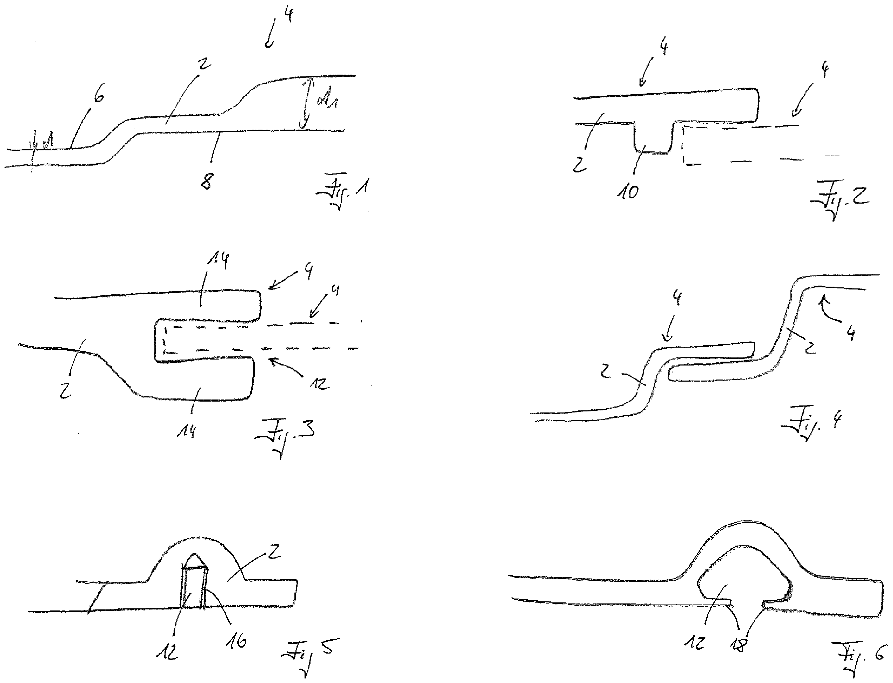

Figur 1 zeigt eine schematische Schnittdarstellung durch einen Körper 2 einer Panzerplatte 4. Die Panzerplatte 4 verfügt über eine Oberseite 6 und eine der Oberseite 6 gegenüber liegende Unterseite 8, die durch eine Dicke voneinander getrennt sind.

Diese Dicke bezeichnet die Materialstärke des Materials des Körpers 2 an der jeweiligen Stelle. Man erkennt in Figur 1, dass diese Dicke an unterschiedlichen Stellen unterschiedlich groß ist. Der Körper 2 der Panzerplatte 4 verfügt folglich über eine variierende Dicke.

Figuren 2, 3 und 4 zeigen unterschiedliche Möglichkeiten, mehrere Panzerplatten 4 aneinander zu befestigen oder anzuordnen, so dass eine Schutzfunktion auch gegen Winkelbeschluss, also Beschuss aus einem flachen Einfallswinkel, und Splitter gewährleistet ist. In Figur 2 verfügt der Körper 2, der mit durchgezogener Linie dargestellten Panzerplatte 4 über einen Vorsprung 10, der in dem wenigstens einen additiven Fertigungsschritt hergestellt wurde. Eine zweite, mit gestrichelten Linien dargestellte, Panzerplatte 4, kann nun, wie in Figur 2 dargestellt, positioniert werden, ohne dass eine Lücke oder ein Spalt zwischen den beiden Panzerplatten 4 entsteht.

Figur 3 hingegen zeigt einen Körper 2, der eine Vertiefung 12 in Form einer Nut aufweist. Die beiden Schenkel 14, die die Nut begrenzen, sind ebenfalls einstückig mit dem Rest des Körpers 2 der Panzerplatte 4 ausgebildet und wurden in dem wenigstens einen additiven Fertigungsschritt hergestellt. Zwischen den beiden Schenkeln 14 kann innerhalb der Vertiefung 12 eine weitere Panzerplatte 4 angeordnet werden, die in Figur 3 mit gestrichelten Linien dargestellt ist.

Figur 4 zeigt eine besondere Ausgestaltung der Anschlusselemente der Panzerplatten 4 und deren Körper 2. Durch die "S"-förmige Ausgestaltung können die beiden Panzerplatten 4, wie in Figur 4 gezeigt, aneinander angeordnet werden.

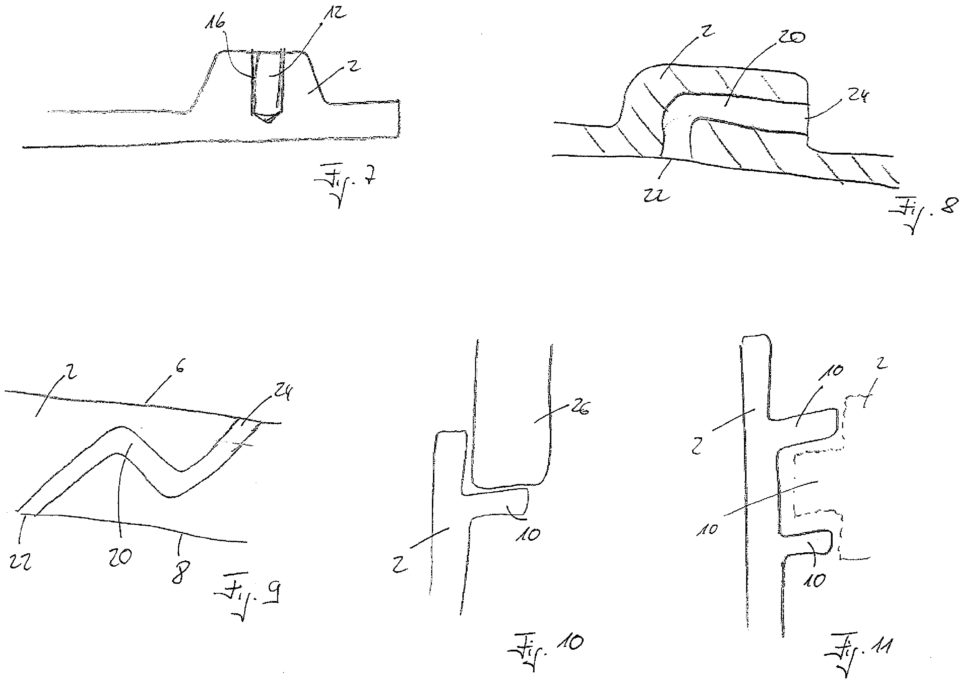

In den Figuren 5, 6 und 7 sind jeweils Körper 2 von Panzerplatten 4 gezeigt, die eine Vertiefung 12 aufweisen. Anders als in Figur 3 handelt es sich jedoch nicht um eine Nut, sondern um eine Bohrung. Man erkennt, dass die Dicke des Körpers 2 an der Stelle der Vertiefung 12 größer ausgebildet ist als im übrigen Bereich des Körpers 2. Auf diese Weise wird die durch die Vertiefung 12 hervorgerufene Schwächung des Materials ausgeglichen. In den Figuren 5 und 7 handelt es sich bei der Bohrung um eine geradlinige Bohrung mit geraden Seitenwänden 16, die parallel zueinander verlaufen. In Figur 6 hingegen verfügt die Vertiefung 12 über zwei Hinterschnitt-Elemente 18, so dass in die Vertiefung 12 in Figur 6 beispielsweise ein Clips- oder Schnapp-Element eingesetzt werden kann.

In den Ausnehmungen 12 können beispielsweise verschiedene Aggregate, Bauteile oder sonstige Elemente, beispielsweise Interieur-Komponenten für ein Kraftfahrzeug, angeordnet werden.

Figur 8 zeigt einen Schnitt durch den Körper 2, der einen durchgängigen Kanal 20 aufweist. Dieser verfügt über eine erste Öffnung 22 und eine zweite Öffnung 24, die auf unterschiedlichen Seiten des Körpers 2 der Panzerplatte 4 liegen. Durch einen derartigen Kanal 20 können beispielsweise fluide Medien, beispielsweise Luft oder Flüssigkeiten oder Kabel geführt werden.

Figur 9 zeigt eine weitere Ausgestaltung des Körpers 2 mit einem durchgängigen Kanal 20. Auch hier befindet sich die erste Öffnung 22 an der Unterseite 8 und die zweite Öffnung 24 an der Oberseite 6 des Körpers 2 der Panzerplatte 4. Der Kanal 20 wechselt zweimal seine Richtung, verfügt folglich über zwei Kupplungen. Dadurch wird die Stabilität der Panzerplatte 4 und ihres Körpers 2 wenig beeinflusst und ein solch gewundener Kanal 20 kann beispielsweise für Belüftungszwecke verwendet werden.

Der in Figur 10 schematisch dargestellte Körper 2 verfügt über einen Vorsprung 10, der so ausgebildet ist, dass beispielsweise ein Panzerglas 26 eines Fensters oder einer Scheibe, beispielsweise eines Kraftfahrzeuges, angeordnet werden kann. Selbstverständlich können derartige Befestigungselemente für weitere insbesondere aus Glas bestehende Bauteile auch auf andere Weise erreicht werden.

In Figur 11 verfügt der Körper 2 der Panzerplatte 4 über zwei Vorsprünge 10, die voneinander beabstandet angeordnet sind. Zwischen ihnen kann ein Vorsprung 10 eines mit gestrichelten Linien dargestellten zweiten Körpers 2 einer zweiten Panzerplatte 4 angeordnet werden, so dass sie gemeinsam ein Scharnier bilden. Also kann beispielsweise ein Verbindungsstift in Figur 11 von oben nach unten durch in den jeweiligen Vorsprüngen 10 vorhandene, in Figur 11 jedoch nicht gezeigte Bohrungen hindurch geschoben werden. Auf diese Weise wird eine sichere und einfache Verbindung der Panzerplatten 4 und der Körper 2 erreicht, ohne dass dafür die Stabilität und Festigkeit oder Härte der Körper 2 beeinträchtigt werden. Die Vorsprünge 10 der Körper 2 der Panzerplatten 4 werden in dem jeweils wenigstens einen additiven Fertigungsschritt hergestellt.

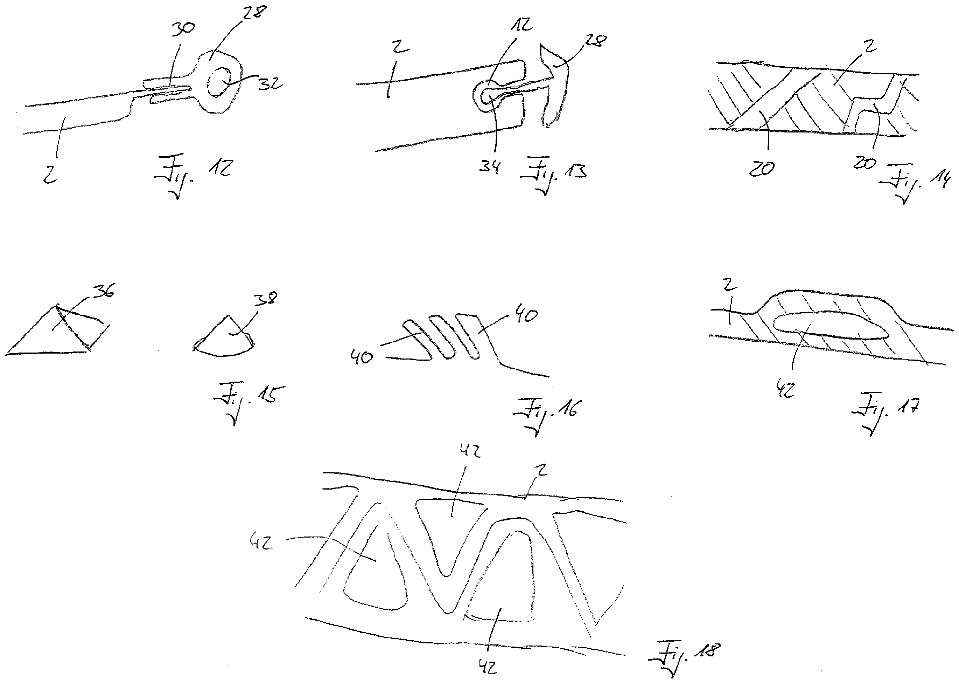

Die Figuren 12 und 13 zeigen jeweils den Körper 2, der mit jeweils einem Dichtungselement 28 verbindbar ist. In Figur 12 verfügt das Dichtungselement über einen Schlitz 30, in den ein Vorsprung des Körpers 2, der eine sehr geringe Dicke aufweist, eingesteckt werden kann. Das Dichtungselement 28 selbst verfügt über eine Hohlbohrung 32, durch die das Dichtungselement 28 besonders einfach komprimierbar ist, so dass eine Dichtwirkung auf besondere einfache und wirksame Weise hervorgerufen werden kann.

In Figur 13 hingegen verfügt der Körper 2 über eine Vertiefung 12 in Form einer Nut mit sich nach unten weitendem Querschnitt, in die ein verdicktes Befestigungsende 34 des Dichtungselementes 28 eingesetzt ist. Auch auf diese Weise lässt sich der Körper 2 auf besonders einfache Weise mit dem Dichtungselement 28 verbinden, ohne dass die Stabilität des Körpers 2 oder die Dichtwirkung des Dichtelementes 28 beeinträchtigt wird.

In Figur 14 ist ein Körper 2 dargestellt, der über mehrere durchgehende Kanäle 20 verfügt, die unterschiedlich ausgebildet sind. Sie dienen insbesondere der Gewichtsreduzierung unter Einsparung von Material des Körpers 2.

In einer Oberseite 6 und/oder einer Unterseite 8 des Körpers 2 können Vorsprünge 10 ausgebildet sein, die durch ihre geometrische Form in der Lage sind, die Flugbahnen von Geschossen oder Splittern zu stören und diese Elemente abzulenken. In Figur 15 und 16 sind verschiedene dieser Vorsprünge dargestellt. In Figur 15 ist ein pyramidenförmiges Element 36 und ein kegelförmiges Element 38 dargestellt, während in Figur 16 verschiedene Rippen 40 gezeigt sind. Diese Elemente 36, 38, 40 können einzeln verwendet werden oder in unterschiedlichen Anzahlen. Sie können auch an einer Oberseite 6 und/oder der Unterseite 8 gemischt verwendet werden und regelmäßig oder unregelmäßig positioniert sein.

Figur 17 zeigt einen Schnitt durch den Körper 2, der einen geschlossenen Hohlraum 42 beinhaltet. Der geschlossene Hohlraum 42 kann als Bauteil integrierte Schottanordnung verwendet werden. Figur 18 zeigt einen Schnitt durch den Körper 2, der unterschiedliche Hohlräume 42 sowie strukturgebende Streben aufweist, durch die der Körper 2 der Panzerplatte 4 als Crash-Element ausgeführt werden kann. Auf diese Weise ist es beispielsweise möglich, die ansonsten nur zur Panzerung verwendeten Panzerplatten auch als energieaufnehmende Elemente zu verwenden, die sich beispielsweise im Falle eines Unfalles des jeweiligen Fahrzeuges verformen und auf diese Weise kinetische Energie in potentielle Energie verwandeln.

### Bezugszeichenliste

- 2: Körper
- 4: Panzerplatte
- 6: Oberseite
- 8: Unterseite
- 10: Vorsprung
- 12: Vertiefung
- 14: Schenkel
- 16: Seitenwand
- 18: Hinterschnitt-Element
- 20: Kanal
- 22: erste Öffnung
- 24: zweite Öffnung
- 26: Panzerglas
- 28: Dichtungselement
- 30: Schlitz
- 32: Hohlbohrung
- 34: Befestigungsende
- 36: pyramidenförmiges Element
- 38: kegelförmiges Element
- 40: Rippe
- 42: geschlossener Hohlraum

## Patentansprüche

1. Verfahren zum Herstellen einer Panzerplatte (4) für eine Plattenpanzerung, wobei die Panzerplatte (4) einen Körper (2) aus einer Metalllegierung aufweist, wobei der Körper (2) durch wenigstens einen additiven Fertigungsschritt hergestellt wird, **dadurch gekennzeichnet, dass** der Körper (2) wenigstens einen durchgängigen Kanal (20) aufweist, der wenigstens einmal seine Richtung ändert, wobei der wenigstens eine Kanal (20) in dem wenigstens einen additiven Fertigungsschritt hergestellt werden.

2. Verfahren nach Anspruch 1, **dadurch gekennzeichnet, dass** der Körper (2) wenigstens ein Anschlusselement, an dem ein Bauteil befestigbar ist, aufweist, das in dem wenigstens einen additiven Fertigungsschritt hergestellt wird.

3. Verfahren nach Anspruch 1 oder 2, **dadurch gekennzeichnet, dass** der Körper (2) eine variierende Dicke aufweist, die in dem wenigstens einen additiven Fertigungsschritt hergestellt wird.

4. Verfahren nach Anspruch 1, 2 oder 3, **dadurch gekennzeichnet, dass** das wenigstens eine Anschlusselement wenigstens einen Vorsprung (10) und/oder wenigstens eine Vertiefung (12), insbesondere wenigstens eine Bohrung, wenigstens ein Hinterschnitt-Element (18), wenigstens eine Gewindebohrung und/oder wenigstens eine Nut aufweist.

5. Verfahren nach einem der vorstehenden Ansprüche, **dadurch gekennzeichnet, dass** die Dicke des Körpers (2) bei dem wenigsten einen Anschlusselement und/oder wenigstens einer Öffnung des wenigstens einen Kanals (20) größer ist.

6. Verfahren nach einem der vorstehenden Ansprüche, **dadurch gekennzeichnet, dass** der Körper (2) wenigstens einen geschlossenen Hohlraum (42) aufweist, der in dem wenigstens einen additiven Fertigungsschritt hergestellt wird.

7. Verfahren nach einem der vorstehenden Ansprüche, **dadurch gekennzeichnet, dass** der Körper (2) an wenigstens einer Oberseite (6) wenigstens einen Vorsprung (10), bevorzugt eine Mehrzahl von Vorsprüngen (10) aufweist.

8. Panzerplatte (4) hergestellt nach einem Verfahren nach einem der vorstehenden Ansprüche.

## Claims

1. A method for producing an armour plate (4) for a plate armouring, wherein the armour plate (4) has a body (2) made of a metal alloy, the body (2) being produced by at least one additive manufacturing step, **characterised in that** the body (2) features at least one continuous channel (20) changing its direction at least once, the at least one channel (20) being manufactured in the at least one additive manufacturing step.

2. The method according to claim 1, **characterised in that** the body (2) has at least one connection element to which a component can be attached, said connection element being produced in the at least one additive manufacturing step.

3. The method according to claim 1 or 2, **characterised in that** the body (2) has a varying thickness, which is produced in the at least one additive manufacturing step.

4. The method according to claim 1, 2 or 3, **characterised in that** the at least one connection element comprises at least one projection (10) and/or at least one depression (12), in particular at least one bore, at least one undercut element (18), at least one threaded bore and/or at least one groove.

5. The method according to one of the preceding claims, **characterised in that** the thickness of the body (2) is greater at the least one connection element and/or at least one opening of the at least one channel (20).

6. The method according to claim 1, **characterised in that** the body (2) has at least one closed cavity (42), which is produced in the at least one additive manufacturing step.

7. The method according to one of the preceding claims, **characterised in that** the body (2) features at least one projection (10), preferably a plurality of projections (10), on at least one upper side (6).

8. An armour plate (4) produced according to one of the preceding claims.

## Revendications

1. Procédé de fabrication d'une plaque de blindage (4) pour un blindage par plaques, ladite plaque de blindage (4) comprenant un corps (2) en un alliage métallique, ledit corps (2) étant fabriqué par au moins une étape de fabrication additive,
**caractérisé en ce que** le corps (2) comprend au moins un canal traversant (20) qui change de direction au moins une fois, ledit au moins un canal (20) étant fabriqué lors de ladite au moins une étape de fabrication additive.

2. Procédé selon la revendication 1,
**caractérisé en ce que** le corps (2) présente au moins un élément de raccordement auquel un composant peut être fixé, qui est fabriqué lors de ladite au moins une étape de fabrication additive.

3. Procédé selon la revendication 1 ou 2,
**caractérisé en ce que** le corps (2) présente une épaisseur variable, qui est fabriquée lors de ladite au moins une étape de fabrication additive.

4. Procédé selon la revendication 1, 2 ou 3,
**caractérisé en ce que** ledit au moins un élément de raccordement comprend au moins une saillie (10) et/ou au moins un creux (12), en particulier au moins un alésage, au moins un élément de contre-dépouille (18), au moins un trou taraudé et/ou au moins une rainure.

5. Procédé selon l'une des revendications précédentes,
**caractérisé en ce que** l'épaisseur du corps (2) est plus grande au niveau dudit au moins un élément de raccordement et/ou d'au moins une ouverture dudit au moins un canal (20).

6. Procédé selon l'une des revendications précédentes,
**caractérisé en ce que** le corps (2) comprend au moins une cavité fermée (42) réalisée lors de ladite au moins une étape de fabrication additive.

7. Procédé selon l'une des revendications précédentes,
**caractérisé en ce que** le corps (2) présente au moins une saillie (10), de préférence une pluralité de saillies (10), sur au moins une face supérieure (6).

8. Plaque de blindage (4) fabriquée par un procédé selon l'une des revendications précédentes.
